## Europäisches Patentamt
## European Patent Office
## Office européen des brevets

(11) Veröffentlichungsnummer: **0 306 555**
**B1**

(12) **EUROPÄISCHE PATENTSCHRIFT**

(45) Veröffentlichungstag der Patentschrift:
29.08.90

(51) Int. Cl.5: **A01K 7/00**, A01K 9/00

(21) Anmeldenummer: **87115209.6**

(22) Anmeldetag: **17.10.87**

(54) **Eimer, insbesondere zum Tränken von Tieren.**

(30) Priorität: **10.09.87 DE 3730380**

(43) Veröffentlichungstag der Anmeldung:
**15.03.89 Patentblatt 89/11**

(45) Bekanntmachung des Hinweises auf die Patenterteilung:
**29.08.90 Patentblatt 90/35**

(84) Benannte Vertragsstaaten:
**AT BE CH FR GB IT LI LU NL**

(56) Entgegenhaltungen:
**CH-A- 254 170**
**DE-U- 7 505 911**

(73) Patentinhaber: **Hinterkopf, Adolf, Ringstrasse 17,
D-7900 Ulm/Lehr(DE)**

(72) Erfinder: **Hinterkopf, Adolf, Ringstrasse 17,
D-7900 Ulm/Lehr(DE)**

(74) Vertreter: **Patentanwälte Phys. Bartels Dipl.-Ing. Fink
Dr.-Ing. Held, Lange Strasse 51, D-7000 Stuttgart 1(DE)**

ACTORUM AG

## Beschreibung

Die Erfindung betrifft einen Eimer, insbesondere zum Tränken von Tieren, beispielsweise Kälbern oder dergleichen, mit einem Saugzapfen an einer die Eimerwandung durchdringenden Durchführung und wenigstens je einem Durchbruch in der Eimerwand auf der Seite des Saugzapfens und der gegenüberliegenden Seite zum Einhängen des Eimers in eine Tragvorrichtung.

In der nicht vorveröffentlichten deutschen Patentanmeldung P 3 620 878.7 ist eine Tränkeinrichtung mit einem Eimer beschrieben. Die miteinander fluchtenden und nach außen über die Eimerwandung überstehenden Endabschnitte seines Tragbügels bilden zwei Lagerzapfen, mittels deren der Eimer in die Tragvorrichtung eingehängt wird. Es ist dadurch möglich, den Eimer aus der Gebrauchsstellung um 180° in eine Nichtgebrauchsstellung zu schwenken. Der Aufwand für die Tragvorrichtung, welche zwei den Eimer zwischen sich aufnehmende Tragarme benötigt, ist hierbei relativ groß, zumal die Tragarme eine Verschiebbarkeit der Lagerzapfen quer zu ihrer Längsachse zulassen müssen und Sicherungsmittel erforderlich sind, um den Eimer in den beiden Schwenkstellungen zu sichern.

Bei einem bekannten Eimer der eingangs genannten Art (DE-U 7 505 911) ist die Eimerwand sowohl auf der Seite des Saugzapfens als auch auf der gegenüberliegenden Seite derart abgeflacht, daß diese beiden abgeflachten Bereiche parallel zueinander und lotrecht zum Boden verlaufen. In diesen abgeflachten Bereichen sind nahe dem oberen Rand des Eimers je zwei sich in Umfangsrichtung erstreckende Schlitze vorgesehen. Der Eimer kann deshalb nur in seiner Gebrauchsstellung wahlweise auf der Seite des Saugzapfens oder der gegenüberliegenden Seite in die Tragvorrichtung eingehängt werden, nicht aber in eine Nichtgebrauchsstellung geschwenkt werden.

Der Erfindung liegt daher die Aufgabe zugrunde, einen Eimer der eingangs genannten Art zu schaffen, der kostengünstiger als der Eimer der vorstehend erwähnten Tränkeinrichtung und wahlweise in seiner Gebrauchsstellung oder seinen Gebrauchsstellungen und einer demgegenüber gestürzten Stellung gehalten werden kann, der aber dennoch einfach zu handhaben ist. Diese Aufgabe löst ein Eimer mit den Merkmalen des Anspruches 1.

Da der erfindungsgemäße Eimer zum Einhängen in die Tragvorrichtung mit Durchbrüchen versehen ist, braucht die Tragvorrichtung nur ein Tragelement aufzuweisen, welches den die gewünschte Lage des Eimers ergebenden Durchbruch zu durchdringen vermag. Der Aufwand für eine solche Tragvorrichtung, bei der es sich um ein einfaches Stanzteil handeln kann, ist minimal. Aber auch durch die Durchbrüche wird der Aufwand für den Eimer zumindest dann nicht erhöht, wenn dieser, wie üblich, aus Kunststoff besteht, da dann die Durchbrüche bereits bei der Herstellung des Eimers eingeformt werden können. Um den Eimer von der Gebrauchslage in die gestürzte Lage zu bringen, in welcher er sich nach unten hin öffnet, wodurch in ihm noch enthaltene Flüssigkeit ablaufen kann und der Innenraum des Eimers gegen Verschmutzung weitgehend gesichert ist, braucht er nur aus der Tragvorrichtung ausgehängt und in gestürzter Lage im Bereich seiner unterhalb des Bodens liegenden Randzone wieder in die Tragvorrichtung eingehängt zu werden.

Bei einer bevorzugten Ausführungsform sind in der unterhalb des Eimerbodens liegenden Randzone wenigstens drei je um 90° in Umfangsrichtung versetzt angeordnete Durchbrüche vorgesehen, von denen der mittlere gegenüber dem Saugzapfen um 180° versetzt ist. Befindet sich, wie üblich, die Tragvorrichtung an einer Wand, dann kann der Eimer in seiner gestürzten Lage wahlweise drei verschiedene Stellungen bezüglich der Wand einnehmen, nämlich eine Stellung, in welcher der Saugzapfen von der Wand wegweist und zwei Stellungen, in welcher der Saugzapfen parallel zur Wand liegt.

Aus Gründen einer stabilen Lage des Eimers sowohl in seiner Gebrauchsstellung als auch der gestürzten Stellung sind vorzugsweise je zwei in Umfangsrichtung im Abstand nebeneinander angeordnete Durchbrüche vorgesehen. Die Tragvorrichtung kann dann mit zwei Tragelementen den Eimer aufnehmen. Da vorteilhafterweise die Tragvorrichtung ein Blechstanzteil mit zwei flachen Zungen als Tragelemente ist, hat bei einer bevorzugten Ausführungsform jeder Durchbruch die Form eines sich in Umfangsrichtung des Eimers erstreckenden Schlitzes.

Um sicherzustellen, daß die im Eimer enthaltene Flüssigkeit zumindest weitgehend mittels des Saugzapfens entnommen werden kann, ist vorteilhafterweise der gesamte Eimerboden gegen die Durchführung hin geneigt.

Bei einer bevorzugten Ausführungsform weist der Eimer ebene, rechtwinklig zueinander angeordnete Wandbereiche auf, die an vorzugsweise viertelzylindrisch gekrümmte Eckzonen anschließen. Gegenüber einem Eimer gleicher Höhe hat ein solcher Eimer ein größeres Fassungsvermögen. Vor allem aber hat der Eimer durch diese Form ebene Wandanlageflächen, welche eine stabile Lage bezüglich der Wand fördern. Schließlich sind ebene Wandbereiche vor allem auch dann von großem Vorteil, wenn die Durchbrüche die Form von sich in Umfangsrichtung erstreckenden Schlitzen haben und, ebenfalls aus Stabilitätsgründen, diese Schlitze paarweise nebeneinander angeordnet sind. Die Zungen oder dergleichen der Tragvorrichtung können dann ebenfalls in einer Ebene liegen, was eine äußerst einfache Form der Tragvorrichtung ergibt. Außerdem klemmt sich der Eimer dann, wenn die Tragelemente der Tragvorrichtung schräg nach oben gerichtet von der Wand, an der sie befestigt sind, abstehen, durch sein Gewicht selbsttätig an beiden Tragelementen gleichmäßig fest.

Weitere vorteilhafte Ausgestaltungen des erfindungsgemäßen Eimers sind Gegenstand der Ansprüche 7 und 8.

Im folgenden ist die Erfindung anhand eines in der Zeichnung dargestellten Ausführungsbeispiels im einzelnen erläutert. Es zeigen

Fig. 1 eine perspektivisch dargestellte Ansicht des Ausführungsbeispiels ohne Saugzapfen sowie eine perspektivisch dargestellte Ansicht einer zugehörigen Tragvorrichtung,

Fig. 2 eine Seitenansicht des Ausführungsbeispiels in einer ersten Gebrauchslage,

Fig. 3 eine Seitenansicht des Ausführungsbeispiels in einer zweiten Gebrauchslage,

Fig. 4 einen Längsschnitt des Ausführungsbeispiels in einer Gebrauchslage gemäß Fig. 3,

Fig. 5 eine Seitenansicht des Ausführungsbeispiels in der Nichtgebrauchslage.

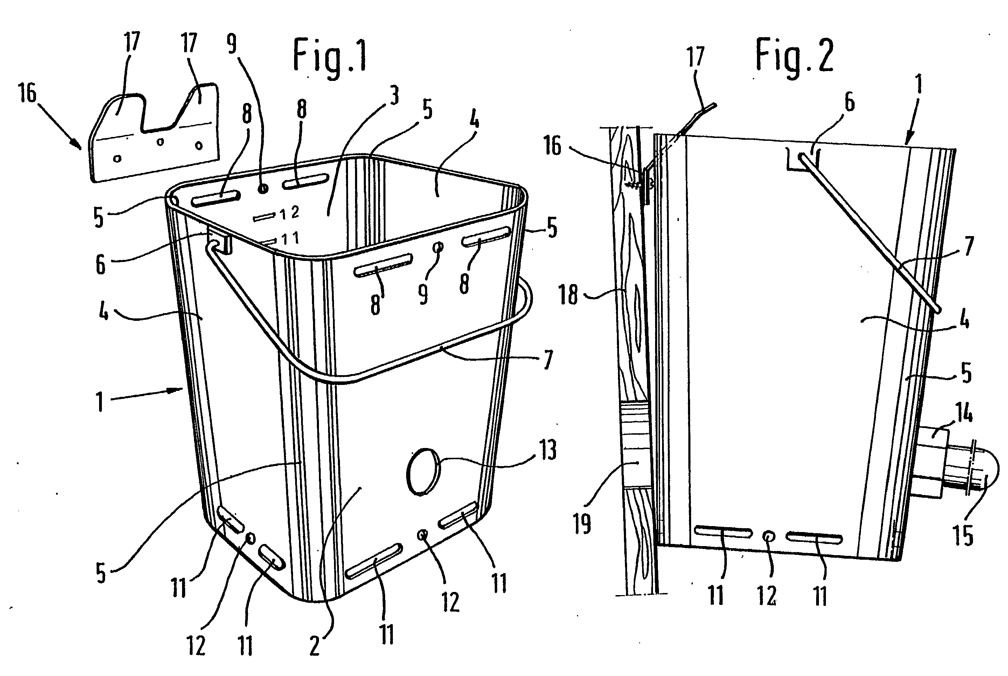

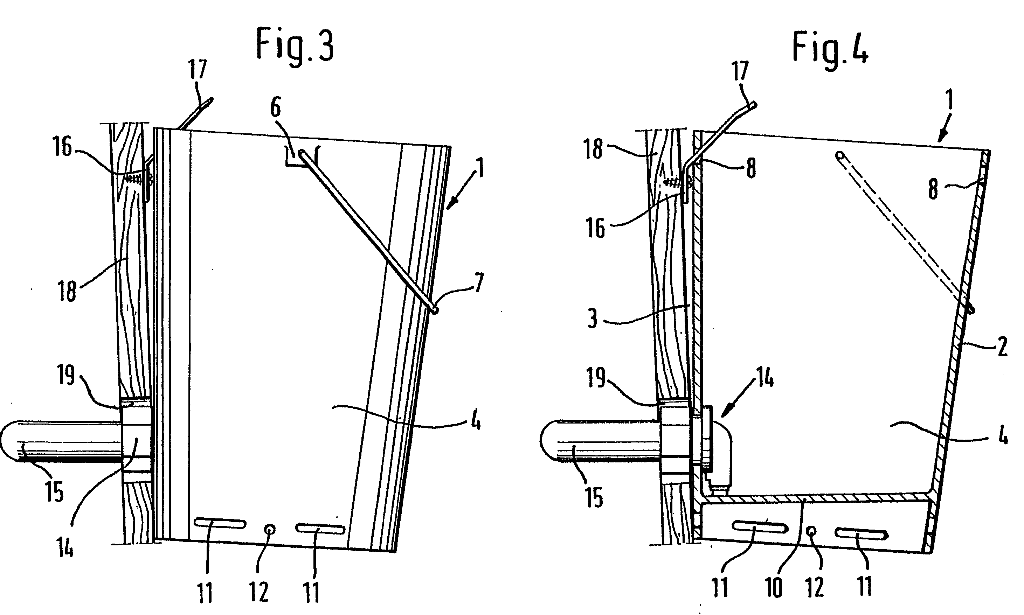

Ein als Ganzes mit 1 bezeichneter Eimer aus Kunststoff für eine Einrichtung zum Tränken von Tieren, insbesondere Kälbern, hat, wie Fig. 1 zeigt, die Form eines nach oben hin breiter werdenden Pyramidenstumpfes. Die Vorderseite 2 der Eimerwandung, die Rückseite 3 und die beiden seitlichen Wandungsteile 4 sind eben und alle gleich groß. Sie sind, wie Fig. 1 zeigt, miteinander über viertelzylindrisch gekrümmte Eckzonen 5 verbunden. Der Querschnitt des Eimers 1 hat deshalb die Form eines Quadrates mit abgerundeten Eckbereichen.

Die Höhe des Eimers 1 ist gleich der Höhe der bekannten,zur Tränkung von Kälbern verwendeten Eimer. Dank der Pyramidenstumpfform ist das Fassungsvermögen etwa 20 % größer.

Im oberen Randbereich sind die beiden seitlichen Wandungsteile 4 mittig mit je einem Lagerauge 6 versehen. In diesen Lageraugen 6 sind die Endabschnitte eines metallischen Tragbügels 7 drehbar gelagert. Sowohl die Vorderseite 2 als auch die Rückseite 3 ist im oberen Randbereich mit zwei parallel zum oberen Rand verlaufenden Schlitzen 8 versehen, die in Umfangsrichtung im Abstand voneinander symmetrisch zur Mitte der Vorderseite 2 bzw. der Rückseite 3 liegen. Im Ausführungsbeispiel ist sowohl zwischen den beiden Schlitzen 8 der Vorderseite 2 als auch denjenigen der Rückseite 3 zusätzlich je ein kreiszylindrischer Durchbruch 9 vorhanden.

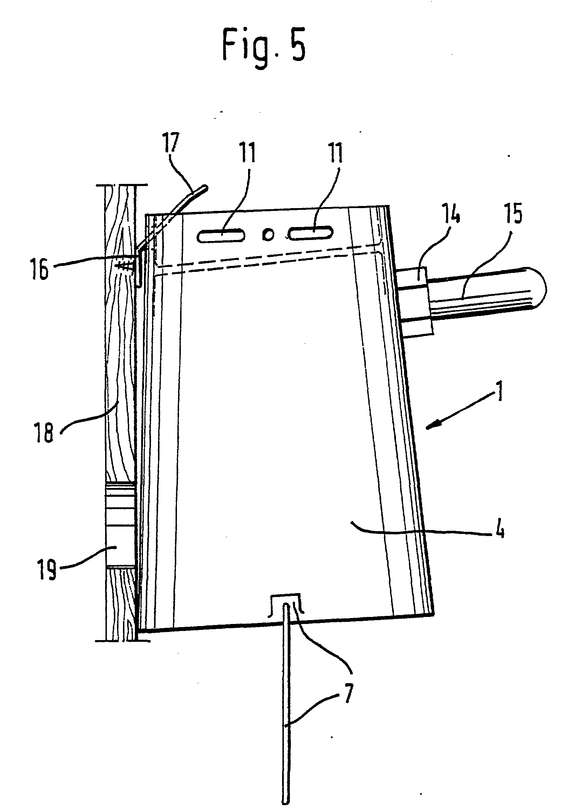

Wie Fig. 4 zeigt, weist der Eimer 1 im Abstand vom unteren Rand der Vorderseite 2, der Rückseite 3 und der seitlichen Wandungsteile 4 einen ebenen Boden 10 auf. Der Abstand des Bodens 10 vom unteren Rand ist an der Vorderseite 2 kleiner als an der Rückseite 3, und zwar um einen Betrag, welcher zu einem spitzen Winkel zwischen der Vorderseite 2 und dem Boden 10 sowie zu einem stumpfen Winkel zwischen letzterem und der Rückseite 3 führt.

In der zwischen dem Boden 10 und dem unteren Rand liegenden unteren Randzone weisen sowohl die Vorderseite 2, als auch die Rückseite 3 und die seitlichen Wandungsteile 4 je zwei zum Rand parallel verlaufende Schlitze 11 auf, die wie die Schlitze 8 ausgebildet und symmetrisch zur Seitenmitte angeordnet sind. In der Seitenmitte ist zusätzlich zwischen jedem Schlitzpaar ein zylindrischer Durchbruch 12 angeordnet.

Etwas oberhalb des Bodens 10 ist die Vorderseite 2 mit einem kreisförmigen Durchbruch 13 (Fig. 1) versehen, in den eine abgewinkelte, ein Ventil enthaltende Durchführung 14 festgelegt ist. Mit dem die Vorderwand 2 durchdringenden Schenkel dieser Durchführung ist ein gleichachsig zu diesem Schenkel angeordneter Saugzapfen 15 verbunden.

Als Tragvorrichtung 16 für den Eimer 1 dient ein Blechstanzteil, das, wie insbesondere Fig. 1 zeigt, aus einem ebenen, rechteckförmigen Befestigungsteil und zwei Zungen 17 besteht, welche an die eine Längsseite des Befestigungsteiles anschließen und aus der Ebene des Befestigungsteils um etwa 45 ° herausgebogen sind. Der Abstand der beiden Zungen 17 voneinander sowie ihre Breite sind an den Abstand beziehungsweise die Länge der Schlitze 8 und 11 angepaßt. Die Tragvorrichtung 16 wird, wie beispielsweise Fig. 2 zeigt, derart an einer Wand 18 befestigt, daß der Befestigungsteil an der Wand 18 anliegt und die Zungen 17 sich nach oben und von der Wand 18 weg erstrecken.

Bei der in Fig 2 dargestellten Gebrauchslage kommt die Rückseite 3 des Eimers 1 in Anlage an die Wand 18. Die Zungen 17 durchdringen dabei die Schlitze 8 der Rückwand 3 von außen nach innen und bilden eine schiefe Ebene, auf der die oberen Begrenzungsflächen der Schlitze 8 infolge des Eimergewichtes nach unten gleiten, bis die Rückseite 3 an der Wand 18 anliegt.

Sofern die Wand 18 mit einer Durchtrittsöffnung 19 für den Saugzapfen 15 versehen ist, kann man, wie Fig. 3 zeigt, den Eimer 1 auch so an die Tragvorrichtung 16 anhängen, daß die Zungen 17 die in der Vorderseite 2 vorgesehenen Schlitze 8 von außen nach innen durchgreifen. Es kommt dann die Vorderseite 2 in Anlage an die Wand 18, wobei der Saugzapfen von der dem Eimer 1 abgekehrten Seite der Wand 18 her zugänglich ist.

Wie Fig. 5 zeigt, kann der Eimer 1 auch in gestürzter Lage an die Tragvorrichtung 16 angehängt werden. Dabei durchdringen die Zungen 18 die Schlitze 11. In dieser Lage können Flüssigkeitsreste abtropfen. Außerdem ist der Innenraum des Eimers 1 weitgehend gegen eine Verschmutzung geschützt. Statt der in Fig. 5 dargestellten Lage, in welcher die Rückseite 3 an der Wand 18 anliegt, kann selbstverständlich der Eimer auch derart an die Tragvorrichtung 16 angehängt werden, daß die Zungen 17 in die Schlitze 11 des einen oder anderen seitlichen Wandungsteiles 4 eingreifen. Die beiden Zungen 17 und ihre schräge Lage bezüglich der Wand 18 gewährleisten auch bei einem Anhängen des Eimers in gestürzter Position eine stabile Lage.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

**Patentansprüche**

1. Eimer (1), insbesondere zum Tränken von Tieren, mit einem Saugzapfen (15) an einer die Eimerwand (2) durchdringenden Durchführung (14) und wenigstens je einem Durchbruch (8, 9, 11, 12) in der Eimerwand auf der Seite des Saugzapfens (15) und der gegenüberliegenden Seite zum Einhängen des Eimers (1) in eine Tragvorrichtung (16), dadurch gekennzeichnet, daß derjenige Durchbruch (11, 12), welcher in derjenigen Seite vorgesehen ist, welche der den Saugzapfen (15) tragenden Seite gegenüberliegt, in einer unterhalb des Eimerbodens (10) liegenden Randzone angeordnet ist.

2. Eimer nach Anspruch 1, dadurch gekennzeichnet, daß in der unterhalb des Eimerbodens (10) liegenden Randzone wenigstens drei je um 90° in Umfangsrichtung versetzt angeordnete Durchbrüche (11, 12) vorgesehen sind, von denen der mittlere in einem dem Saugzafen (15) gegenüberliegenden Wandungsteil angeordnet ist.

3. Eimer nach Anspruch 1 oder 2, dadurch gekennzeichnet, daß je zwei in Umfangsrichtung im Abstand nebeneinander angeordnete Durchbrüche (8, 11) vorgesehen sind.

4. Eimer nach einem der Ansprüche 1 bis 3, dadurch gekennzeichnet, daß wenigstens ein Teil der Durchbrüche (8, 11) die Form eines sich in Umfangsrichtung erstreckenden Schlitzes hat.

5. Eimer nach einem der Ansprüche 1 bis 4, dadurch gekennzeichnet, daß der gesamte Eimerboden (10) gegen die Durchführung (14) hin geneigt ist.

6. Eimer nach einem der Ansprüche 1 bis 5, dadurch gekennzeichnet, daß der Eimer (1) ebene, im rechten Winkel zueinander angeordnete Wandbereiche (2, 3, 4) aufweist, die an vorzugsweise viertelzylindrisch gekrümmte Eckzonen (5) anschließen, und daß die unterhalb des Eimerbodens (10) liegende Randzone durch den unteren Endabschnitt dieser Wandbereiche gebildet ist.

7. Eimer nach Anspruch 6, dadurch gekennzeichnet, daß Paare von Durchbrüchen (8, 11) symmetrisch zur Längsmittellinie der sie enthaltenden Wandbereiche (2, 3, 4) angeordnet sind.

8. Eimer nach Anspruch 6 oder 7, dadurch gekennzeichnet, daß in der unteren Randzone jedes der vier Wandbereiche (2, 3, 4) wenigstens einer der Durchbrüche (11, 12),vorzugsweise unter Bildung je eines Schlitzpaares, vorgesehen ist.

## Claims

1. Bucket (1), in particular for watering animals, with a suction plug (15) on a bush (14) penetrating the bucket wall (2) and at least one opening (8, 9, 11, 12) in the bucket wall on the side of the suction plug (15) and the opposite side respectively for hanging the bucket (1) from a support device (16), characterised in that the opening (11, 12) which is provided in the side which lies opposite the side supporting the suction plug (15), is located in a marginal zone located below the base (10) of the bucket.

2. Bucket according to claim 1, characterised in that provided in the marginal zone located below the base (10) of the bucket are at least three openings (11, 12) staggered respectively by 90° in the peripheral direction, whereof the central opening is located in a part of the wall lying opposite the suction plug (15).

3. Bucket according to claim 1 or 2, characterised in that two openings (8, 11) respectively are provided, which are arranged one beside the other spaced apart in the peripheral direction.

4. Bucket according to one of claims 1 to 3, characterised in that at least part of the openings (8, 11) are in the shape of a slot extending in the peripheral direction.

5. Bucket according to one of claims 1 to 4, characterised in that the entire base (10) of the bucket is inclined towards the bush (14).

6. Bucket according to one of claims 1 to 5, characterised in that the bucket (1) comprises flat wall regions (2, 3, 4) arranged at right angles to each other, which adjoin corner regions (5) preferably curved in the shape of a quarter of a cylinder and that the marginal zone located below the base (10) of the bucket is formed by the lower end section of these wall regions.

7. Bucket according to claim 6, characterised in that pairs of openings (8, 11) are arranged symmetrically to the longitudinal central line of the wall regions (2, 3, 4) containing them.

8. Bucket according to claim 6 or 7, characterised in that provided in the lower marginal zone of each of the four wall regions (2, 3, 4) is at least one of the openings (11, 12), preferably forming a pair of slots respectively.

## Revendications

1. Seau (1), en particulier pour donner à boire aux animaux, comprenant une tétine (15) montée dans une ouverture (14) traversant sa paroi (2), et, au moins, une ouverture (8, 9, 11, 12) pratiquée dans sa paroi du côté de la tétine (15) et dans le côté opposé pour permettre de suspendre le seau (1) dans un dispositif de support (16), caractérisé en ce que l'ouverture (11, 12) pratiquée dans le côté qui est à l'opposé de celui comportant la tétine (15) est située dans une zone marginale située sous le fond (10) du seau.

2. Seau selon la revendication 1, caractérisé en ce que la zone marginale située sous le fond (10) du seau présente, au moins, trois ouvertures (11, 12) percées dans la zone marginale et décalées entre elles de 90° dans le sens du pourtour et en ce que l'ouverture centrale est située dans la paroi opposée à la tétine (15).

3. Seau selon la revendication 1 ou 2, caractérisé en ce que deux ouvertures (8, 11) espacées dans le sens du pourtour sont prévues.

4. Seau selon l'une quelconque des revendications 1 à 3, caractérisé en ce qu'une partie, au moins, des ouvertures (8, 11) a la forme d'une fente s'étendant dans le sens du pourtour.

5. Seau selon l'une quelconque des revendications 1 à 4, caractérisé en ce que le fond (10) du seau est incliné en direction de l'ouverture (14).

6. Seau selon l'une quelconque des revendications 1 à 6, caractérisé en ce que ledit seau (1) présente des parois planes (2, 3, 4) disposées à angle droit qui se raccordent à des zones angulaires (5) en forme de quarts de cylindres, de préférence, et en ce que la zone marginale située sous le fond (10) du seau est formée par la partie d'extrémité inférieure de ces zones.

7. Seau selon la revendication 6, caractérisé en ce que les ouvertures (8, 11) sont disposées symétriquement de part et d'autre de l'axe longitudinal des parois (2, 3, 4) dans lesquelles elles sont situées.

8. Seau selon la revendication 6 ou 7, caractérisé en ce que dans la zone marginale inférieure de chacune des quatre parois (2, 3, 4) est prévue l'une, au moins, des ouvertures (11, 12), de préférence, sous la forme d'une paire de fentes.

Fig.1

Fig.2

EP 0 306 555 B1

EP 0 306 555 B1

Fig.3

Fig.4

# Fig. 5